# FASCICULE DE BREVET EUROPEEN

(11) **EP 1 431 447 B1**
(45) Date de publication et mention de la délivrance du brevet: **10.01.2007**
(21) Numéro de dépôt: 03104479.5
(22) Date de dépôt: 02.12.2003
(51) Int. Cl.: D06N 3/06, D06N 3/12, D06N 7/00, B32B 27/12

(54) **Membrane revêtue apte à être utilisée notamment en tant que bâche de protection**
Beschichtete Membran zur Verwendung insbesondere in Schutzplanenstoffe
Coated membrane for use particularly as protective cover

(30) Priorité: 09.12.2002 FR 0215513
(43) Date de publication de la demande: 23.06.2004
(73) Titulaire: Tissage et Enduction Serge Ferrari SA, 38110 Saint Jean de Soudain (FR)
(72) Inventeur: Saiz, Carlos, 73000 Chambery (FR); Martin, Géraldine, 38110 La Tour du Pin (FR)
(74) Mandataire: Palix, Stéphane

(56) Documents cités:
- EP-A- 0 374 776
- EP-A- 0 450 144
- DE-C- 4 304 079
- FR-A- 2 305 301
- US-A- 5 700 870
- DATABASE WPI Section Ch, Week 199236 Derwent Publications Ltd., London, GB; Class A18, AN 1992-295982 XP002250880 & JP 04 202853 A (TORAY IND INC), 23 juillet 1992 (1992-07-23)

## Description

La présente invention concerne une membrane revêtue destinée à être utilisée notamment comme bâche de protection.

L'invention se rattache au domaine des membranes techniques, et plus précisément des textiles enduits pouvant être utilisés en tant que bâches de protection, par exemple pour équiper des voitures de transport ferroviaire, des citernes souples ou bassins destinés à contenir de liquides agressifs, ou encore des écrans de protection soumis à un environnement sévère.

L'invention vise plus particulièrement une nouvelle structure de membrane qui possède à la fois une bonne résistance aux conditions atmosphériques ou physico-chimiques agressives, tout en conservant une capacité à être assemblée par les procédés de thermosoudure standards et avec un coût de revient satisfaisant.

### Etat de la technique

Dans le domaine des bâches, par exemple pour équiper des voitures de transport ferroviaire ou des citernes souples, il est très couramment employé des textiles enduits d'un matériau à base de polychlorure de vinyle (PVC) tel que décrit dans le document FR 2 305 301. Ces textiles enduits de PVC présentent l'avantage de pouvoir être aisément assemblés par thermosoudure, pour permettre la confection adaptée à la forme à réaliser.

Toutefois, les textiles enduits de PVC présentent certains inconvénients, notamment lorsqu'ils sont soumis à des conditions extérieures sévères. Ainsi, un textile enduit de PVC soumis à une température particulièrement basse risque de voir sa couche d'enduction se dégrader avec le temps, ôtant donc ainsi les propriétés d'étanchéité qui sont recherchées pour équiper par exemple des voitures de transport ferroviaire. De la même manière, on observe une dégradation des couches d'enduction de PVC lorsqu'elles celles-ci sont soumises à des températures élevées, ou exposées à des atmosphères chimiques corrosives.

Ce type de bâche peut également être soumis à des contraintes spécifiques, propres à des applications particulières. Ainsi, dans le cas où les bâches sont employées sur des remorques de transport ferroviaire, le textile enduit est soumis aux jets d'étincelles consécutives aux mauvais contacts du pantographe sur la caténaire d'alimentation électrique. Ces étincelles s'accompagnent de projections de particules de métal en fusion qui viennent dégrader la couche d'enduction en la brûlant, formant donc un trou dans la bâche. La bâche n'est donc plus étanche et cela peut générer des risques de dégradation des marchandises transportées.

Il a déjà été proposé de réaliser les bâches de voitures ferroviaires en utilisant des textiles à base de fils résistants à la chaleur et notamment des fibres aramides. Ces bâches possèdent une meilleure résistance aux particules de métal en fusion, mais elles présentent en revanche les inconvénients d'être d'un coût de revient élevé, et d'être excessivement rigides, ce qui empêche de les plier aisément, notamment au niveau des zones de soufflet lorsque les bâches sont rabattues pour le chargement de la remorque.

Dans le cas particulier des camions destinés au transport des matières bitumineuses pour réaliser les revêtements de chaussée, il est nécessaire d'utiliser des bâches afin d'empêcher ces matières de se refroidir trop rapidement. Cette exposition à la chaleur et à une atmosphère chimiquement réactive avec le PVC provoque également une dégradation rapide de la bâche.

Les bâches de protection sont également utilisées par exemple en tant qu'écran de protection pour des équipements de soudure à l'arc. L'exposition au rayonnement ultraviolet et surtout aux projections de matériaux en fusion, génère des dégradations et des perforations de ces écrans qui ne remplissent alors plus leur fonction essentielle.

Pour résoudre ces inconvénients, on a déjà proposé des membranes revêtues de silicone sur chacune des deux faces, mais ces membranes ne peuvent être assemblées que par des procédés de couture ou par collage, procédés qui présentent de nombreux inconvénients, respectivement la perte de l'étanchéité et l'impossibilité de garantir la qualité de l'assemblage par collage.

On connaît d'après le document DE- 43.04.079 un multicouche comprenant une bande support en un textile présentant, sur l'une de ses faces un matériau PVC flexible et ignifuge et sur l'autre de ses faces un matériau élastomère thermoplastique ou réticulé.

Si ce multicouche présente bien des propriétés anti-feux et des propriétés de résistances mécaniques, il ne va cependant pas pouvoir résister à des environnements chimiques particulièrement corrosifs. La couche d'élastomère va être progressivement attaquée et va se fissurer et se dégrader progressivement, laissant de cette manière l'âme textile sans protection et donc également susceptible d'être détériorée.

On connaît également d'après les documents EP- 0.374.776 et EP- 0.450.144 un appareil respiratoire avec une cagoule réalisée avec un multicouche comprenant une âme en textile résistant aux déchirures réalisé avec des fibres de verre. Un revêtement PVC est prévu sur une face du textile et un revêtement silicone, éventuellement associé avec un promoteur d'adhésion, sur l'autre face du textile.

Cependant, ce type de multicouche, qui plus est relativement coûteux, est réservé à des applications très particulières et spécifiques ne nécessitant pas de surfaces importantes de textile formant l'âme support. De plus, en cas de chocs mécaniques conduisant à des déchirures de l'une ou l'autre des couches extérieures, les fibres de verres qui seront libérées vont constituer un danger potentiel pour la peau et les muqueuses de l'utilisateur, ainsi que pour l'environnement.

### Exposé de l'invention

L'objectif de l'invention est de fournir une membrane qui puisse être utilisée pour la fabrication de bâches diverses, et qui présente donc des propriétés de soudabilité par les techniques courantes (hautes-fréquences, ultrasons, air chaud, fer chaud), ainsi que des propriétés de résistance à la température et à des atmosphères corrosives ou plus généralement agressives, et ce en conservant une souplesse nécessaire à la manipulation aisée. Un deuxième problème posé est la réalisation de surfaces importantes pour des bâches de protection diverses en passant également par des étapes de confection textile.

La présente invention concerne donc une membrane revêtue, apte à être utilisé notamment en tant que bâche de protection. Une telle membrane comporte une âme en support textile et un revêtement sur chacune de ses faces. Le textile est choisi à base de fils de polyester et/ou de polyamide.

Conformément à l'invention, la première de ses faces est revêtue par un matériau à base de polychlorure de vinyle, tandis que la seconde de ses faces est revêtue d'un matériau à base de silicone.

Autrement dit, l'invention consiste à réaliser une membrane hybride, comportant des matières différentes d'une face à l'autre, de telle sorte que la première couche, réalisée par exemple à base de PVC peut être soudée aisément à des panneaux adjacents, réalisés à partir du même matériau. La seconde face est revêtue d'un matériau à base de silicone et présente, quant à elle, une excellente résistance aux très hautes et très basses températures, ainsi que de façon générale aux atmosphères chimiques qui provoquent la dégradation du PVC. Cette membrane hybride combine donc à la fois de bonnes capacités à la confection par thermosoudure, avec une excellente résistance aux conditions de température, et plus généralement d'environnement extérieur sévère ou agressif.

Dans une première forme de réalisation, l'âme en support textile peut être composée d'un tissu tissé. Dans une deuxième forme de réalisation, l'âme en support textile peut être composée d'un tissu non tissé.

Pour réaliser ce type de membrane, on a remarqué qu'il convenait de prendre des précautions techniques et opératoires pour éviter que le PVC soit au contact des matières siliconées, au risque de voir apparaître des zones de non conformité et un manque d'adhésion des revêtements à l'âme de la membrane, que celle ci soit en tissus tissés ou tissus non tissés. C'est la raison pour laquelle on a remarqué dans un mode de réalisation privilégié que l'âme de la membrane doit assurer une étanchéité au passage des matériaux de surface qui sont incompatibles entre eux. Cette étanchéité est obtenue par un tissage suffisamment serré dans le cas d'une âme en tissus tissé, ou suffisamment dense dans le cas d'une âme en tissus non tissé.

Dans un mode de réalisation particulier, on préfèrera utiliser des matériaux silicone du type enductibles sans solvant, ce qui permet préalablement d'enduire le support et de déposer à la suite une couche d'enduction de PVC.

En pratique, cette matière silicone choisie peut être comprise dans la famille des silicones élastomères vulcanisables par hydrosilylation (qui est une réaction de polyaddition), notamment du type bi-composant.

Ce type de textile enduit peut être utilisé dans de multiples applications, notamment en tant que bâches de protection, par exemple pour équiper des voitures de transport ferroviaire, des citernes souples ou bassins destinés à contenir de liquides agressifs, ou encore des écrans de protection soumis à un environnement sévère.

L'invention sera bien comprise et ses divers avantages et différentes caractéristiques ressortiront mieux lors de la description suivante, de l'exemple non limitatif de réalisation.

### Exemple de réalisation de l'invention

On a obtenu de bons résultats en réalisant des textiles enduits dont l'âme textile est réalisée à base de polyester, couvert par les revendications, et/ou de polyamide non couvert par les revendications. Le textile employé peut alors être réalisé à partir des fils de polyester haute ténacité présentant un titre de 1100 dtex, avec un nombre de fils au centimètre de l'ordre de 12, donnant une âme textile présentant une masse surfacique de l'ordre de 300 g/m².

Le PVC employé est classique dans le domaine de l'enduction, et typiquement réalisé à base de PVC plastifié ignifugé.

La face siliconée est réalisée par enduction d'un silicone élastomère pouvant être réticulé par hydrosilylation (polyaddition), notamment du type bi-composant.

On a obtenu de bons résultats en utilisant une composition d'enduction siliconnée réalisée à partir du silicone commercialisé sous la référence Elastosir^{®} 1 LR 6250F par la société WACKER.

Ce silicone est associé aux des additifs suivants:
- « Elastosil^{®} crosslinking agent 525 », commercialisé par la société WACKER, dans une proportion de 3 % à 6 % de la masse de silicone ;
- « Catalyseur OL^{®} » commercialisé par la société WACKER, dans une proportion de 0,10 % à 0,2 % de la masse de silicone ;
- « Adhesion promoter HF 86^{®} » commercialisé par la société WACKER, dans une proportion de 1 % à 3 % de la masse de silicone ;
- De l'Oxyde de titane, dans une proportion de 5 % environ de la masse de silicone.

## Revendications

1. Membrane revêtue, apte à être utilisée notamment en tant que bâche de protection, comportant une âme en support textile à base de fils de polyester, et une couche de revêtement sur chacune de ses faces, **caractérisée en ce que** la première de ses faces est revêtue par un matériau à base de polychlorure de vinyle, et **en ce que** la seconde de ses faces est revêtue d'un matériau à base de silicone.

2. Membrane selon la revendication 1, **caractérisée en ce que** la seconde face est revêtue d'un matériau à base de silicone enductible sans solvant.

3. Membrane selon la revendication 1 ou 2, **caractérisée en ce que** le silicone est compris dans la famille des silicones élastomères vulcanisables par hydrosilylation, notamment du type bi-composant.

4. Membrane selon l'une quelconque des revendications précédentes, **caractérisée en ce que** l'âme en support textile est composée d'un tissu tissé.

5. Membrane selon l'une quelconque des revendications 1 à 3, **caractérisée en ce que** l'âme en support textile est composée d'un tissus non tissé.

6. Bâche de protection réalisée à partir d'une membrane revêtue selon l'une quelconque des revendications précédentes.

## Claims

1. Coated membrane for use particularly as a protective cover, with a polyester thread-based fibre support core, and a layer of coating on each surface, **characterised in that** the first of its surfaces is coated with a polyvinylchloride-based material, and **in that** the second of its surfaces is coated with a silicone-based material.

2. Membrane as claimed in claim 1, **characterised in that** the second surface is coated with a silicone-based material that can be coated without solvents.

3. Membrane as claimed in claim 1 or 2, **characterised in that** the silicone is from the family of elastomer silicones that can be vulcanized by hydrosilylation, notably of the bi-component type.

4. Membrane as claimed in any of the previous claims, **characterised in that** the fibre support core is made of woven fabric.

5. Membrane as claimed in any of claims 1 to 3, **characterised in that** the fibre support core is made of non-woven fabric.

6. Protective cover produced using a coated membrane as claimed in any of the previous claims.

## Patentansprüche

1. Beschichtete Membran, die sich insbesondere zur Verwendung als Schutzplane eignet, einen Kern aus einem textilen Träger auf Polyesterfaserbasis und eine Überzugsschicht auf jeder ihrer Seiten umfassend,
**dadurch gekennzeichnet, dass**
die erste ihrer Seiten mit einem Material auf Polyvinylchloridbasis beschichtet ist, und
die zweite ihrer Flächen mit einem Material auf Silikonbasis beschichtet ist.

2. Membran nach Anspruch 1, **dadurch gekennzeichnet, dass** die zweite Seite mit einem Material auf Silikonbasis beschichtet ist, das ohne Lösungsmittel aufgetragen werden kann.

3. Membran nach Anspruch 1 oder 2, **dadurch gekennzeichnet, dass** das Silikon in die Gruppe der durch Hydrosilylierung vulkanisierbaren elastomeren Silikone, insbesondere der Zweikomponentenart fällt.

4. Membran nach einem der vorhergehenden Ansprüche, **dadurch gekennzeichnet, dass** der Kern aus einem textilen Träger aus einem gewebten Gewebe besteht.

5. Membran nach einem der Ansprüche 1 bis 3, **dadurch gekennzeichnet, dass** der Kern aus einem textilen Träger aus einem vliesartigen Gewebe besteht.

6. Schutzplane, die aus einer beschichteten Membran nach einem der vorhergehenden Ansprüche hergestellt ist.
